(19) Europäisches Patentamt
European Patent Office
Office européen des brevets

(11) **EP 0 537 461 B1**

(12) **EUROPÄISCHE PATENTSCHRIFT**

(45) Veröffentlichungstag und Bekanntmachung des Hinweises auf die Patenterteilung:
**24.07.1996 Patentblatt 1996/30**

(51) Int Cl.[6]: **G01N 30/48**, B01J 20/32

(21) Anmeldenummer: **92114902.7**

(22) Anmeldetag: **01.09.1992**

(54) **Modifizierte chromatographische Trägermaterialien**

Modified chromatographic support

Support chromatographique modifié

(84) Benannte Vertragsstaaten:
**BE CH DE FR GB IT LI NL SE**

(30) Priorität: **13.09.1991 DE 4130475**

(43) Veröffentlichungstag der Anmeldung:
**21.04.1993 Patentblatt 1993/16**

(73) Patentinhaber: **MERCK PATENT GmbH**
**D-64271 Darmstadt (DE)**

(72) Erfinder:
• **Boss, Karl-Siegfried, Prof. Dr.**
**W-8035 Gauting (DE)**
• **Walfort, Andreas**
**W-3530 Warburg 10 (DE)**
• **Eisenbeiss, Friedhelm, Dr.**
**W-6108 Weiterstadt (DE)**
• **Lubda, Dieter**
**W-6140 Bensheim (DE)**

(56) Entgegenhaltungen:
**EP-A- 0 173 233**

• **ANALYTICAL CHEMISTRY Band 61, Nr. 21, 1. November 1989, Seiten 2445-2448, Washington, US; J. HAGINAKA et al.: "Internal-Surface Reversed-Phase Silica Support for Direct Injection Determination of Drugs in Biological Fluids by Liquid Chromatography"**
• **ANALYTICAL CHEMISTRY Band 62, Nr. 8, 15. April 1990, Seiten 807-810, Washington, US; D.E. WILLIAMS: "Extended Life for Blood Serum Analysis Columns Using Dual Zone Chromatographic Materials"**

## Beschreibung

Die Erfindung betrifft verbesserte chromatographische Trägermaterialien, ihre Herstellung und ihre Verwendung als Sorbens in der Chromatographie. Die Partikel dieser Materialien weisen hydrophobe Oberflächen in den Poren und hydrophile äußere Oberflächen auf.

## Stand der Technik

Für die HPLC-Bestimmung von niedermolekularen Substanzen in biologischen Materialien und Körperflüssigkeiten, z.B. Blutserum, -plasma oder Urin, werden bevorzugt Umkehrphasen-Packungsmaterialien eingesetzt. Zeit-, kosten- und arbeitsaufwendige Probenvorbehandlungsschritte sind notwendig, da sonst bei der direkten Injektion von proteinhaltigen Proben die Proteine denaturieren und auf den chromatographischen Trägermaterialien akkumulieren würden. Somit würde die Chromatographiesäule irreversibel geschädigt. Deswegen müssen die Proteine vor der Analyse quantitativ entfernt werden, sei es durch Präzipitation, Membranfiltration und/oder Flüssig-Flüssig oder Flüssig-Festphasen Extraktion. Diese Komplikation betrifft wichtige Bestimmungen, die in sehr großer Anzahl ausgeführt werden; dazu gehören Bestimmungen von Arzneimitteln und ihrer Metabolite (Therapeutisches Drug Monitoring; Doping-Kontrolle), weiterhin Bestimmungen von körpereigenen Substanzen (Klinisch-chemische Analytik), sowie von Xenobiotica (Biologisches Monitoring).

In jüngster Zeit wurde daher versucht, poröse Trägermaterialien herzustellen, die simultan zu einer selektiven Retention von niedermolekularen Analyten (Molekulargewicht < 5000 Dalton), eine quantitative Abtrennung von Proteinen und anderen makromolekularen Bestandteilen einer direkt injizierten Probe ermöglichen. Derartige Trägermaterialien besitzen Diffusionsbarrieren, die makromolekularen Verbindungen nur eine eingeschränkte Verteilungsphase bzw. Oberfläche zugänglich machen. Die Abschirmung kann durch chemische und/oder physikalische Effekte erfolgen; methodische Vorschläge dafür sind in jüngster Zeit vielfältig veröffentlicht worden:

* Shielded Hydrophobic Phase, SHP: D.J. Gisch, B.T. Hunter und B. Freibush, J. Chromatogr. (1988) 433, 264;
* Semipermeable Surface, SPS: L.J. Glunz, et. al., Paper No. 490, Pittsburgh Conference, 1990;
* Internal Surface Reversed Phase, ISRP: Th.C. Pinkerton, H.I. Hagestam U.S. Pat. 4.544.485, 1985, EP O 173 233, 1989;
  J. Haginaka et al., (1989) Anal. Chem 61, 2445-2448;
* Dual Zone, DZ: D.E. Williams, P.M. Kabra, (1990) Anal. Chem. 62, 807;
* Restricted Access Stationary Phases, RASP: J. Haginaka, (1991) Trends in Analytical Chemistry 1, 17.

Für die vorliegende Erfindung stellen das US Patent 4,544,485 (korrespondierend dazu EP 0 173 233) und Haginaka et al. (1989) den nächstliegenden Stand der Technik dar. Diese Verfahren sind jedoch mit vielfältigen Nachteilen verbunden, die im folgenden näher ausgeführt werden sollen.

Chromatographische Trägermaterialien entsprechend EP 0173 233 besitzen enge Poren als physikalische Diffusionsbarrieren, die das Eindringen von Serum- oder Plasmaproteinen zur hydrophoben Phase verhindern. Diese Poren besitzen Durchmesser von 8 nm oder weniger. Die äußeren Oberflächen der Partikel sind hydrophil, während an die inneren Oberflächen Oligopeptide gebunden sind, die hydrophobe Aminosäuren enthalten.

Diese Materialien werden aus glycerylderivatisiertem Kieselgel dadurch hergestellt, daß z.B. das Tripeptid Glycyl-Phenylalanyl-Phenylalanin über den Aminoterminus mittels 1,1-Carbonyldiimidazol chemisch an die Diolgruppen des Glycerylrestes gebunden wird. Die auf der äußeren Oberfläche befindlichen Phenylalanin-Reste werden anschließend enzymatisch abgespalten; für die Abspaltung wird Carboxypeptidase A bevorzugt. Dabei bleiben die Glycinreste jedoch im wesentlichen am Träger gebunden. Deswegen besitzt dieses Trägermaterial negativ geladene Carboxylgruppen auf der äußeren Oberfläche und vor allem auch im Poreninneren (C-terminales Phenylalanin). Es besitzt somit nicht die erwünschten reinen Umkehrphaseneigenschaften. Darüber hinaus führt diese Kationenaustauschereigenschaft auf der äußeren Oberfläche zu unerwünschten Wechselwirkungen mit dem Probenmaterial.

Für die Wirksamkeit der Trägermaterialien werden Peptide als hydrophobe Phase nach der technischen Lehre von EP 0 173 233 als essentiell angesehen.

Peptide besitzen stets hydrophile Strukturen in der Hauptkette und in der Regel ionische Endgruppen. Deswegen sind mit Trägermaterialien entsprechend EP 0 173 233 keine Trennungen basierend auf der Ionenpaar-Chromatographie möglich. Diese Art von Umkehrphasenchromatographie hat sich insbesondere für die HPLC-Analytik von Pharmaka und ihren Metaboliten bewährt. Weiterhin ist die Verwendung von Oligopeptiden als stationäre Phase in der Umkehrphasenchromatographie ungewöhnlich, so daß gängige Analyseverfahren umgearbeitet werden müssen.

Peptide als hydrophobe Phase sind wesentlich raumerfüllender als die sonst in der Umkehrphasenchromatographie üblichen Alkylreste. Deswegen ist die erzielbare Belegungsdichte mit der hydrophoben Phase für die Trägermaterialien nach EP 0 173 233 niedrig. Die Säulen, die mit Materialien entsprechend diesem Stand der Technik gefüllt werden, weisen deswegen niedrige Bindungskapazitäten auf. Die Menge an aufzutrennender Substanz und das Probenvolumen unterliegen starken Beschränkungen.

Insgesamt ist die mit Peptiden erreichbare Hydrophobizität der Umkehrphasen niedriger als die, die mit herkömmlicher Alkylierung erreicht werden kann.

Haginaka et al. (1989) offenbaren ein chromatographisches Trägermaterial, bei dem die hydrophobe Phase aus Fettsäureresten in Amidbindungen besteht. Die Amidbindung wird von den Autoren als hinreichend stabil für den Verwendungszweck angesehen. Die Herstellung des Materials ist jedoch aufwendiger als die des Materials nach EP 0 173 233: Für die Entfernung der Fettsäurereste auf den äußeren Oberflächen wird ein spezielles neues Enzym, Polymyxinacylase, benötigt, das schwierig zugänglich ist. Es ist z.B. nicht kommerziell erhältlich. Außerdem entstehen bei der enzymatischen Abspaltung freie Aminogruppen, die in einer zusätzlichen Reaktion in eine "Diol"-Phase überführt werden müssen, um Störungen zu vermeiden.

Für die eingangs beschriebenen chromatographischen Trennungsaufgaben fehlt es also an Trägermaterialien, die es wohl erlauben, proteinhaltige Proben direkt aufzutragen, die jedoch auch gute Bindungskapazitäten und ein hohes Maß an Hydrophobizität, vergleichbar mit der von alkylierten Phasen, aufweisen, und die einfach herzustellen sind. Der Erfindung lag daher die Aufgabe zu Grunde, chromatographische Trägermaterialien mit derartigen Eigenschaften und Verfahren zu ihrer Herstellung bereitzustellen.

## Beschreibung

Überraschenderweise wurde gefunden, daß sich derartige chromatographische Trägermaterialien herstellen lassen, wenn man beispielsweise Kieselgelpartikel, die nach bekannten Verfahren mit 2,3-Dihydroxypropoxy-Gruppen (-O-CH$_2$-CHOH-CH$_2$OH; "Diol"-Gruppe) modifiziert wurden, in einem weiteren Schritt mit Fettsäurederivaten unter Ausbildung einer Esterbindung umsetzt. Anschließend werden die Acylgruppen an der äußeren Oberfläche enzymatisch mittels Esterasen und/oder Lipasen abgespalten. Überraschenderweise ist selbst partikelgebundene Lipase für diese Reaktion geeignet. Dabei entstehen stabile Trägermaterialien. Dieser Befund ist im Hinblick auf die technische Lehre von Haginaka et al. überraschend, da die Esterbindung noch instabiler als die Amidbindung ist. Das erfindungsgemäße Material ist, verglichen mit dem Stand der Technik, einfacher herstellbar, da leicht erhältliche Enzyme eingesetzt werden können, und da ohne zusätzliche Umsetzung die gewünschte "Diol"-Phase auf der Oberfläche entsteht.

Gegenstand der Erfindung ist somit ein Packungsmaterial für die Flüssigkeitschromatographie, basierend auf porösen hydroxylgruppenhaltigen Materialien mit Fettsäureresten als Umkehrphasen, die auf die inneren Oberflächen der Poren beschränkt sind, dadurch gekennzeichnet, daß die Fettsäurereste in Esterbindung vorliegen. Die äußeren Oberflächen der Partikel sind hydrophil.

Es können poröse silikathaltige Materialien als Ausgangsmaterial benutzt werden, beispielsweise Kieselgele oder poröse Gläser. Derartige Materialien sind in großer Zahl kommerziell erhältlich: beispielsweise Nucleosil™, Fa. Macherey & Nagel, Düren; LiChrospher®, Fa. E. Merck, Darmstadt; oder Controlled-Pore Glass™, Fa. Electro-Nucleonics Inc., USA; Bioran® Glas, Fa. Schott, Mainz. Diese Materialien können beispielsweise nach bekannten Methoden zu den entsprechenden "Diol"-Phasen, d.h. 2,3-Dihydroxypropoxy-modifizierten Trägern umgesetzt werden (Dean, P.D.G., Johnson, W.S., Middle, F.A., Affinity Chromatography, 1985, IRL-Press, England).

Als hydrophile Träger sind aber auch fertige "Diol"-Phasen kommerziell erhältlich, die erfindungsgemäß eingesetzt werden können; z.B. LiChrospher®-Diol (Fa. E. Merck, Darmstadt).

Weiterhin sind ebenfalls hydroxylgruppenhaltige Polymere oder Copolymere als Ausgangsmaterial für die erfindungsgemäßen Sorbentien geeignet; auch derartige Materialien sind kommerziell erhältlich: beispielsweise TSK-Gel®, Fa. Toyo Soda, Japan; Eupergit®, Fa. Röhm-Pharma, Weiterstadt . Allgemein sind alle hydrophilen porösen Materialien, die eine ausreichende Dichte von Hydroxylgruppen (d.h. etwa 2-6 μmol/m$^2$) besitzen, als Ausgangsmaterial für die erfindungsgemäßen chromatographischen Trägermaterialien geeignet.

Erfindungsgemäß leiten sich die Fettsäurereste von gesättigten und/oder ungesättigten Fettsäuren mit einer geraden oder ungeraden Anzahl von Kohlenstoffatomen ab. Die Anzahl der C-Atome kann entsprechend dem notwendigen Maß an Hydrophobizität zwischen 2 und 24 in Analogie zu den üblichen Verfahren der Chromatographie an Umkehrphasen gewählt werden. Bevorzugt sind diese Reste geradkettig, geeignet sind jedoch auch verzweigtkettige Verbindungen. Besonders bevorzugt sind die Reste der Buttersäure (C$_4$), der Caprylsäure (C$_8$) und der Stearinsäure (C$_{18}$).

Gegenstand der Erfindung ist weiterhin ein Verfahren zur Herstellung von Packungsmaterial für die Flüssigkeitschromatographie mit auf die inneren Oberflächen von porösen Partikeln beschränkten Umkehrphasen, bestehend aus Fettsäureresten, mit folgenden Verfahrensschritten:

a) Einführung von Hydroxylgruppen, sofern noch nicht im Ausgangsmaterial vorhanden, in das Trägermaterial;

b) Veresterung der Hydroxylgruppen mit Fettsäuren, wobei die gesamten inneren und äußeren Oberflächen der Partikel belegt werden;

c) enzymatische Hydrolyse der an den äußeren Oberflächen befindlichen Fettsäureester.

Für die Einführung der Hydroxylgruppen sind mono-, di- und trifunktionelle Silane und auch Mischungen derselben geeignet. Bevorzugt wird ein Kieselgelträger mit homogener Silanolgruppenverteilung an der Oberfläche, der mit mono- und/oder difunktionellen Silanen zu entsprechenden "Diol"-Phase umgesetzt wurde. Für die weitere Umsetzung werden silanolgruppenhaltige Materialien (Kieselgele, poröse Gläser), die eine Belegung der Phasenoberfläche mit "Diol"-Gruppen von 2-6 $\mu mol/m^2$, bevorzugt 2,5-3,5 $\mu mol/m^2$ besitzen, als Ausgangsmaterial bevorzugt.

Für die Veresterung geeignete Fettsäurederivate sind dem Fachmann bekannt: Dazu gehören die entsprechenden Säureanhydride, Säureazide, Säurehalogenide und insbesondere die Säurechloride. Bevorzugt sind die Säurechloride der Buttersäure ($C_4$), der Caprylsäure ($C_8$) und der Stearinsäure ($C_{18}$).

Dabei bildet die primäre und/oder sekundäre Hydroxy-Gruppe des immobilisierten Glycerylrestes ("Diol"-Restes) mit dem Säurehalogenid in bekannter Weise den entsprechenden Ester.

Die Umsetzung der "Diol"-haltigen Trägermaterialien mit den beschriebenen Fettsäurehalogeniden erfolgt unter 4- bis 10-fachem, bevorzugterweise 8- bis 9-fachem, Säurechloridüberschuß, bezogen auf den "Diol"-Gehalt der eingesetzten Materialien. Die Reaktion wird üblicherweise in Gegenwart von 1 bis 3 Äquivalenten einer organischen Base, vorzugsweise 1,5 Äquivalenten Triethylamin, in einem wasserfreien Lösungsmittel, z.B. Chloroform, ausgeführt. Nach tropfenweiser Zugabe des gekühlten Säurehalogenids bei 0 - 10 °C, vorzugsweise 4 °C, läßt man den Ansatz 12 bis 15 Stunden bei 20-25 °C reagieren. Das erhaltene Material wird abfiltriert, mehrmals mit Chloroform, Methanol, Wasser und abschließend wieder mit Methanol gewaschen und getrocknet.

Die Herstellung der Fettsäurederivate erfolgt im übrigen nach an sich bekannten Methoden, wie sie in der Literatur (z.B. Houben-Weyl, Methoden der Organischen Chemie, Georg-Thieme-Verlag, Stuttgart) beschrieben sind, und zwar unter Reaktionsbedingungen, wie sie für die genannten Umsetzungen bekannt und geeignet sind. Dabei kann man auch von an sich bekannten, hier nicht näher erwähnten Varianten Gebrauch machen.

Die Oberflächenbelegung mit den bevorzugt verwendeten $C_4$-, $C_8$- und $C_{18}$-Fettsäureliganden liegt, bezogen auf den jeweiligen "Diol"-Gehalt des Ausgangsmaterials, zwischen 60 und 90 %, vorzugsweise bei 80 %.

In einem weiteren Schritt werden erfindungsgemäß die an der äußeren Oberfläche der Partikel befindlichen Mono- bzw. Diacylester enzymatisch durch esterspaltende Enzyme, wie Lipasen (EC 3.1.1.3) oder Esterasen (EC 3.1.1.1) gespalten. Bevorzugt wird Schweinepankreas-Lipase Typ II eingesetzt.

Bei Trägermaterialien, die einen mittleren Porendurchmesser von kleiner 8 nm besitzen, kann die enzymatische Hydrolyse mit löslichen Enzymen erfolgen, da diese weitgehend vom Poreninneren ausgeschlossen werden.

In einer besonders bevorzugten Ausführungsform der Erfindung werden Enzyme, die an Partikel gebunden wurden, zur Abspaltung der außenständigen Fettsäurereste eingesetzt. Zu diesem Zweck werden z.B. Esterasen oder Lipasen nach aus der Literatur bekannten Methoden (Affinity Chromatography, 1985, IRL-Press Ltd., England) beispielsweise an Agarosegel kovalent gebunden. Die Eignung derartiger Enzympräparationen ist überraschend, da allgemein angenommen wird, daß partikelgebundene Enzyme makromolekulare Substrate gar nicht oder nur schlecht angreifen.

Der Einsatz von partikelgebundenen Enzymen erlaubt Verfahrensvarianten, bei denen das Enzym leicht zurückgewonnen werden kann. Dazu werden z.B. Trägermaterialien mit magnetischen Eigenschaften, wie beispielsweise Magnogel™ A4R oder Magnogel™ AcA 44 (L'Industrie Biologique Francais) für die Bindung der Enzyme eingesetzt. Nachdem die außenständigen Fettsäurereste des chromatographischen Trägermaterials enzymatisch abgebaut wurden, kann das immobilisierte Enzym mit Hilfe eines Magneten aus dem Reaktionsansatz entfernt und wieder verwendet werden.

Der erfindungsgemäße Einsatz von partikelgebundenen Enzymen ist auch in Fällen vorteilhaft, in denen ein chromatographisches Trägermaterial mit relativ großen Poren (> 8 nm) erwünscht ist. Ähnlich vorteilhaft ist die Verwendung von partikelgebundenen Enzymen, wenn die Porengröße eine breite Verteilung besitzt. In diesen Fällen wird erfolgreich verhindert, daß die Enzyme in einen beträchtlichen Teil der Poren eindringen und infolgedessen die an der inneren Oberfläche der Poren befindlichen Fettsäurereste in unerwünschter Weise abspalten.

Wird Agarosegel als Träger für die Enzyme verwendet, so läßt es sich nach der enzymatischen Reaktion durch Erwärmen auf 60 °C und/oder durch Behandlung mit denaturierenden oder chaotropen Verbindungen (beispielsweise Harnstoff, Guanidinium-Hydrochlorid, Salze der Thiocyansäure) in Lösung bringen. Die solubilisierte Enzympräparation kann anschließend durch Filtration aus dem Reaktionsansatz entfernt werden.

Die enzymatische Hydrolyse der auf der äußeren Oberfläche der chromatographischen Träger befindlichen Fettsäureester erfolgt beispielsweise durch Inkubation von 1 g des jeweiligen Fettsäure-modifizierten Trägermaterials mit 2000 bis 8000 Enzymeinheiten, vorzugsweise 5000 Einheiten, der jeweiligen gelösten oder trägergebundenen Lipase oder Esterase in einem Puffer bei pH 6 bis pH 8, vorzugsweise pH 7,1, für 60 bis 90 Stunden bei 37 °C.

Nach der enzymatischen Reaktion wird das erhaltene Material abfiltriert, mehrmals mit Puffer, Kochsalzlösung (1 Mol/Liter) und Wasser gewaschen. Bei Verwendung eines gelösten Enzyms kann das chromatographische Trägermaterial anschließend getrocknet werden. Bei Verwendung einer an Agarose immobilisierten Lipase oder Esterase wird das erhaltene Material zunächst in 20 Gewichtsanteilen Wasser resuspendiert und vorzugsweise für 2 Stunden auf 60 °C erwärmt. Anschließend wird abfiltriert, mehrmals mit Kochsalzlösung (1 Mol/Liter), Wasser und Methanol gewaschen und getrocknet.

Die Oberflächenbelegung mit Fettsäure-Liganden vor und nach der enzymatischen Behandlung kann mit Hilfe der Elementaranalyse und/oder kommerziell erhältlicher enzymatischer Tests auf freie Fettsäuren (z.B. Fa. Boehringer, Mannheim, Deutschland) bestimmt werden.

Typischerweise beträgt der von der äußeren Oberfläche des chromatographischen Trägermaterials entfernte Anteil bei Verwendung von löslichen Lipasen oder Esterasen 10 bis 20 %, bei Verwendung von trägergebundenen Lipasen oder Esterasen 1 bis 5 % bezogen auf die gesamte Oberflächenbelegung.

Gegenstand der Erfindung ist weiterhin ein Verfahren zur chromatographischen Trennung von Substanzgemischen, dadurch gekennzeichnet, daß ein chromatographisches Packungsmaterial benutzt wird, dessen poröse Partikel an ihren inneren Oberflächen Umkehrphasen, bestehend aus Fettsäureestern, besitzen.

Gegenstand der Erfindung ist schließlich ein Verfahren zur Probenvorbereitung von biologischen Proben, dadurch gekennzeichnet, daß störende makromolekulare Begleitsubstanzen mittels eines Materials entfernt werden, dessen poröse Partikel an ihren inneren Oberflächen Umkehrphasen, bestehend aus Fettsäureestern, besitzen.

Die erfindungsgemäß hergestellten chromatographischen Trägermaterialien mit auf das Poreninnere beschränkten Umkehrphaseneigenschaften und hydrophiler äußere Oberfläche eignen sich hervorragend als Packungsmaterialien für die Chromatographie, insbesondere zur direkten Injektion, Aufbereitung und Analyse von proteinhaltigen Proben mittels Säulenchromatographie.

**Kurze Beschreibung der Abbildungen**

Figur 1:      Protein-Elutionsprofil (Einzelheiten siehe Beispiel 5)
Figur 2:      Apparativer Aufbau (Einzelheiten siehe Beispiel 7)
Figur 3:      Stellungen des automatischen Umschaltventils (Einzelheiten siehe Beispiel 7)
Figur 4:      Elutionsdiagramm (Einzelheiten siehe Beispiel 7)
Figur 5:      Elutionsdiagramm (Einzelheiten siehe Beispiel 8)

**Beispiele**

Die Herstellung der erfindungsgemäßen Chromatographiematerialien wird im folgenden beispielhaft beschrieben, ohne daß in dieser Beschreibung eine Einengung des Erfindungsgegenstandes zu sehen ist. Die Vorteile gegenüber den bislang aus dem Stand der Technik bekannten ISRP-Packungsmaterialien werden durch die mitgeteilten Anwendungsbeispiele deutlich.

**Beispiel 1:**

Herstellung eines chromatographischen Trägermaterials mit $C_{18}$-Acylketten an der inneren Porenoberfläche ausgehend von Kieselgel, das mit 2,3-Dihydroxypropoxy-Gruppen modifiziert wurde

**1.1. Epoxidierung**

10 g von LiChrospher® Si (sphärisches Kieselgel mit einer spezifischen Oberfläche von 330 $m^2$/g, einer Partikelgröße von 12 µm und einem mittleren Porendurchmesser von 7 nm) wird in 50 ml Toluol suspendiert. Nach Zugabe von 2,6 ml (entsprechend 3 µmol/$m^2$) Glycidyloxypropyl-methyl-dimethoxysilan wird 5 Stunden unter Rühren am Rückfluß gekocht. Das Material wird abfiltriert, mit Toluol und Methanol gewaschen und getrocknet.

**1.2. Ringöffnung zur "Diol"-Phase**

Das Produkt aus 1.1. wird in 50 ml wäßrige Schwefelsäurelösung (5 Gewichts-%) suspendiert und 3 Stunden unter langsamen Rühren am Rückfluß gekocht. Anschließend wird das Reaktionsprodukt abfiltriert, mit Wasser sulfatfrei gewaschen, mit Methanol gewaschen und getrocknet.

Man erhält ein Diol-modifiziertes Kieselgel mit einer Belegung von 2,79 µmol/$m^2$ (berechnet aus dem Gehalt an C von 7,0 %).

### 1.3. Umsetzung mit Stearinsäurechlorid

1 g des unter 1.2. erhaltenen Trägermaterials wird in einem Dreihalskolben mit Rührer und Thermometer bei 4 °C in 5 ml wasserfreiem Chloroform suspendiert und mit 11,7 mmol gekühltem Triethylamin versetzt.

Nach tropfenweiser Zugabe von 7,8 mmol Stearinsäurechlorid, welches in 5 ml gekühltem Chloroform gelöst ist, wird die Suspension für 24 Stunden bei 20 °C gerührt.

Das erhaltene Material wird je zweimal mit je 20 ml Chloroform, Methanol, Wasser und abschließend wieder mit Methanol gewaschen und getrocknet.

Die Berechnung der Oberflächenbelegung an $C_{18}$-Acylketten (Stearoyl-Gruppen) anhand einer Elementaranalyse ergibt einen Wert von 1,98 $\mu mol/m^2$.

### 1.4. Enzymkatalysieter Abbau mit Lipase

1 g des unter 1.3. erhaltenen Materials wird mit 50 mg Schweinepankreas Lipase Typ II, entsprechend 5000 Enzymeinheiten (Fa. Sigma Chemie, München, Deutschland), die in 20 ml eines Puffers (2 mM TrisHCl, 1 mM $CaCl_2$, 7 mM NaCl, pH 7,1) gelöst wurde, versetzt. Unter Schütteln läßt man diese Mischung für 72 Stunden bei 37 °C reagieren. Das erhaltene Material wird abfiltriert, nacheinander je zweimal mit je 30 ml des obigen Puffers, mit Kochsalzlösung (1 Mol/Liter), Wasser und Methanol gewaschen und getrocknet. Die Berechnung der Oberflächenbelegung an $C_{18}$-Acyl ketten nach dem enzymatischen Anbau anhand einer Elementaranalyse ergibt einen Wert von 1,68 $\mu mol/m^2$.

### 1.5. Enzymkatalysierter Abbau mit partikelgebundener Lipase

1 g des unter 1.3. erhaltenen Materials wird mit 5000 Enzymeinheiten einer Weizenkeimlipase (Typ I-A, gebunden an vernetzter (4 %) Agarose; Art. Nr. L 2764; Fa. Sigma Chemie, München, Deutschland), die in 20 ml eines Puffers (2 mM Tris-HCl, 1 mM $CaCl_2$, 7 mM NaCl, pH 7,1) suspendiert wurde, versetzt. Unter Schütteln läßt man diese Mischung für 72 Stunden bei 37 °C reagieren. Das erhaltene Material wird abfiltriert, nacheinander je zweimal mit je 30 ml des obigen Puffers, mit Kochsalzlösung (1 Mol/Liter) und Wasser gewaschen. Das erhaltene Material wird in 20 ml Wasser resuspendiert und für zwei Stunden unter Schütteln auf 60 °C erwärmt. Anschließend wird das Material abfiltriert, nacheinander je zweimal mit Je 30 ml Kochsalzlösung (1 Mol/Liter), Wasser und Methanol gewaschen und getrocknet. Die Berechnung der Belegung mit $C_{18}$- Acyl ketten nach dem enzymatischen Abbau anhand einer Elementarenalyse ergibt einen Wert von 1,90 $\mu mol/m^2$.

### Beispiel 2:

Herstellung eines chromatographischen Trägermaterials mit $C_8$- Acyl ketten an der inneren Porenoberfläche ausgehend von Kieselgel, das mit 2,3-Dihydroxypropoxy-Gruppen modifiziert wurde.

Die Herstellung dieses Materials erfolgt analog dem Verfahren, wie es unter 1.1. bis 1.5. beschrieben wurde, wobei statt des Stearinsäurechlorids Caprylsäurechlorid eingesetzt wird.

### Beispiel 3:

Herstellung eines chromatographischen Trägermaterials mit $C_4$- Acylketten an der inneren Porenoberfläche ausgehend von Kieselgel, das mit 2,3-Dihydroxypropoxy-Gruppen modifiziert wurde

Die Herstellung dieses Materials erfolgt analog dem Verfahren, wie es unter 1.1. bis 1.5. beschrieben wurde, wobei statt des Stearinsäurechlorids Buttersäurechlorid eingesetzt wird.

### Beispiel 4: Kapazitätsfaktoren (k')

Bei verschiedenen Packungsmaterialien (siehe Beispiele 1 bis 3) wurden für Theophyllin und für Phenytoin die Kapazitätsfaktoren (k') bestimmt; diese wurden außerdem vergleichsweise für ein Material entsprechend dem Stand der Technik (EP 0 173 233) bestimmt.

Das erfindungsgemäße Packungsmaterial wurde vor (Zeile A) und nach (Zeile B) Abbau der außenständigen Säurereste untersucht.

Materialien, die durch Hydrolyse mit partikelgebundener Lipase hergestellt wurden (siehe Beispiel 1.5.), unterschieden sich in ihren chromatographischen Eigenschaften nicht wesentlich von solchen, die mittels gelöster Lipase hergestellt wurden (siehe Beispiel 1.4.).

Der Kapazitätsfaktor (k') errechnet sich folgendermaßen:

$$k' = (t_R - t_M) / t_M$$

mit:

$t_R =$ Retentionszeit des Analyten,
$t_M =$ Retentionszeit der mobilen Phase.

Die chromatographische Bedingungen waren:
Säulendimensionen: 30 x 4 mm I.D.; mobile Phase: Wasser; Flußrate: 0,5 ml/min; Detektion: UV 271/205 nm; Theophyllin (9,2 µg/ml); Phenytoin (5 µg/ml); Injektionsvolumen: 100 µl

Vergleichende Untersuchung (*)

Die chromatographischen Bedingungen bei der vergleichenden Untersuchung waren folgende:
Mobile Phase: 85 % (v/v) 0,1 M $K_2HPO_4$-Puffer, pH 6,8, 10 % (v/v) Isopropanol, 6 % (v/v) Tetrahydrofuran; Flußrate: 1 ml/min.
Unter diesen chromatographischen Bedingungen eluiert Phenytoin von der in EP 0 173 233 beschriebenen ISRP-Säule (GFF-S 5-80, Regis Chemical Company, Morton Grove, Illinois, USA) bereits mit einem K'-Wert von 11,36. Dieses Material weist also einen Kapazitätsfaktor auf, der weniger als die Hälfte von dem Kapazitätsfaktor für das erfindungsgemäße Material beträgt.

Ergebnisse:

| Packungsmaterial | | Kapazitätsfaktoren | | (*) |
|---|---|---|---|---|
| | | Theophyllin | Phenytoin | |
| C-18 | A | 20,7 | >> 30 | |
| (Stearoyl) | B | 18,9 | >> 30 | 26,3 |
| C-8 | A | 3,2 | > 30 | |
| (Capryloyl) | B | 2,5 | > 30 | 24,5 |
| C-4 | A | 0,0 | 20,6 | |
| (Butyryl) | B | 0,0 | 18,6 | 16,0 |

**Beispiel 5**: Protein-Elutionsprofil

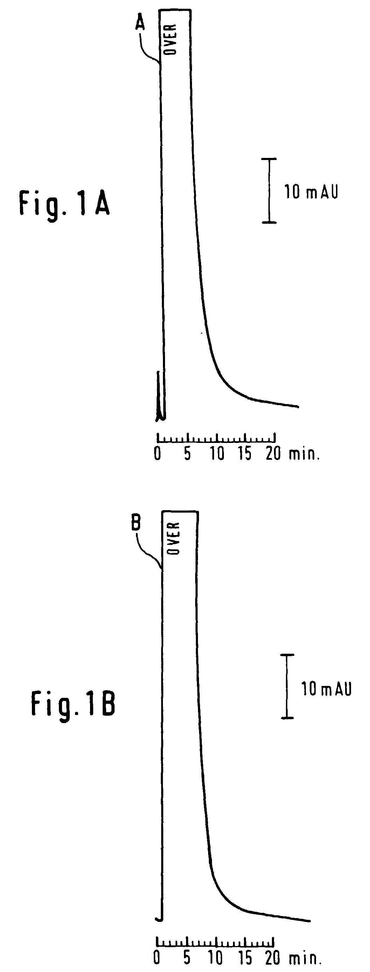

Unter folgenden chromatographischen Bedingungen wurden 500 µl Humanserum aufgetragen:
Packungsmaterial entsprechend Beispiel 1; Säulendimensionen:
10 x 4 mm I.D.; Mobile Phase: Wasser; Flußrate: 0,5 ml/min; Detektion: UV 280 nm
Die Ergebnisse finden sich in Figur 1: Figur 1A zeigt das Elutionsprofil bei der ersten Injektion, Figur 1B bei der zehnten Injektion.
Materialien, die durch Hydrolyse mit partikelgebundener Lipase hergestellt wurden (siehe Beispiel 1.5.), unterschieden sich in ihren chromatographischen Eigenschaften nicht wesentlich von solchen, die mittels gelöster Lipase hergestellt wurden (siehe Beispiel 1.4.).

**Beispiel 6**: Protein-Wiederfindung

Unter den chromatographischen Bedingungen, wie in Beispiel 5 beschrieben, wurden mehrfach 500 µl Humanserum aufgetragen; die Wiederfindung der Serumproteine im Eluat wurde durch kolorimetrische Proteinbestimmung nach der Biuret-Methode ermittelt.

Ergebnisse:

| Nummer der Injektion | Wiederfindung (%) |
|---|---|
| 1 | 99,6 |

(fortgesetzt)

| Nummer der Injektion | Wiederfindung (%) |
|---|---|
| 2 | 102,3 |
| 3 | 98,5 |
| 4 | 101,5 |
| 5 | 99,7 |

**Beispiel 7**:

Direktinjektion mit integrierter Probenvorbereitung für die Analyse von Phenytoin in Humanplasma

A) **apparativer Aufbau**

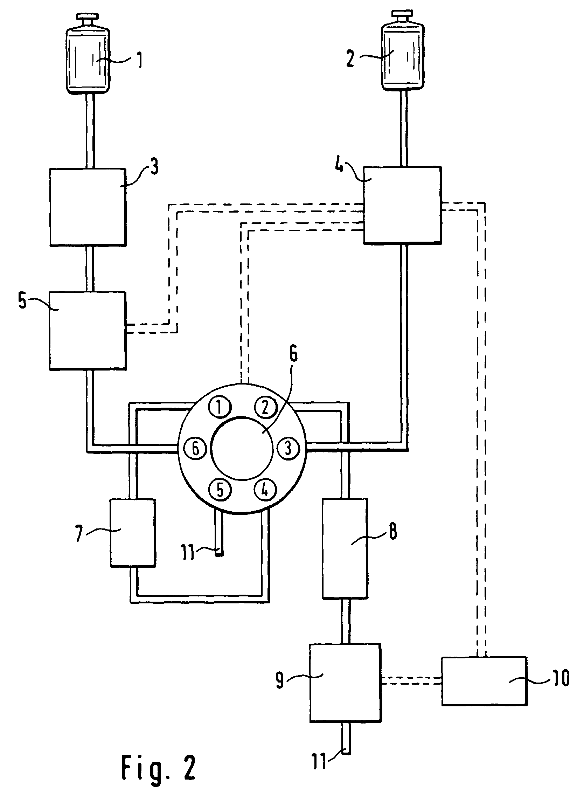

Aus Figur 2 ist der apparative Aufbau zu entnehmen; die Kennzeichnungen in der Abbildung bedeuten im einzelnen:

1:    Vorsäulen-Puffer
2:    Analysen-Puffer
3:    HPLC-Pumpe (L-6000)
4:    HPLC-Pumpe (L-6200)
5:    automatischer Probengeber (AS-4000)
6:    automatisches Umschaltventil (ELV-7000)
7:    Vorsäule
8:    analytische Säule
9:    Detektor
10:   Integrator (D-2500)
11:   Abfall

(Geräte von Fa. E. Merck, Darmstadt, Deutschland)

B) **Stellungen des automatischen Umschaltventils (6)**

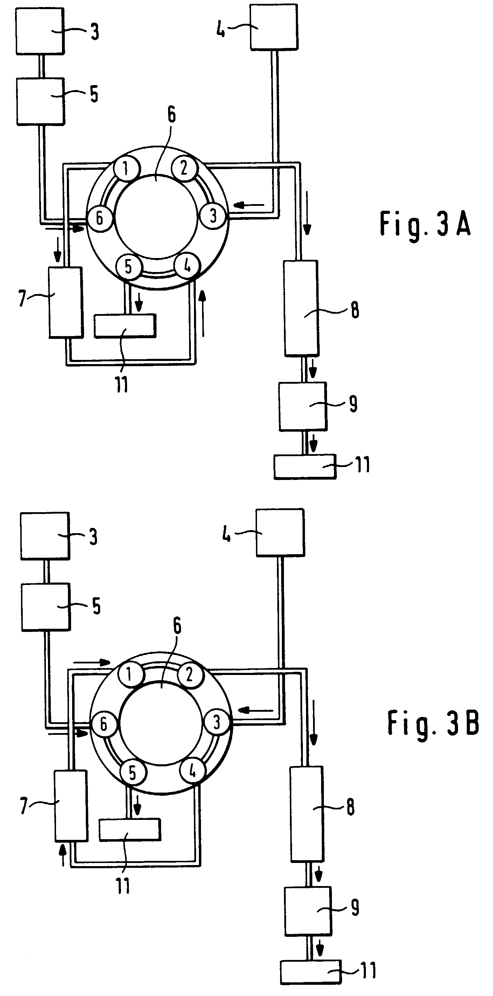

Aus Figur 3 sind die Leitungsverbindungen zwischen den Modulen aus Figur 2 ersichtlich, wie sie in Abhängigkeit von der Stellung des Umschaltventils geschaltet werden:

Figur 3a:     Stellung "LOAD"
Figur 3b:     Stellung "INJECT"

C) **Chromatographische Bedingungen**

Vorsäule: gemäß Beispiel 1; Säulendimension: 30 x 4 mm I.D.; Vorsäulen-Puffer: 0,05 M $NaH_2PO_4$, pH 4,0; Analytische Säule: LiChrospher® 60 RP-select B, 5 μm, 125 x 4 mm I.D.; Analysen-Puffer: 0,05 M $NaH_2PO_4$; pH 4,0 / Wasser / Acetonitril (40:40: 30, V:V:V); Detektion: UV 205 nm.

D) **Vollautomatischer Analysenzyklus**

Nach Injektion der Plasmaprobe (100 μl) durch den Automatischen Probengeber (5) in Stellung "LOAD" des Umschaltventils (6) gelangt die Probe mit Hilfe des durch die HPLC-Pumpe (3) geförderten Vorsäulen-Puffers (1; Flußrate: 0,5 ml/min) auf die Vorsäule (7) mit dem erfindungsgemäßen Sorbens. Der Analyt (Phenytoin) wird aufgrund der erfindungsgemäßen Eigenschaften auf der Vorsäule (7) selektiv reteniert, während die biologische Restmatrix (Proteine, etc.) innerhalb von 12 min direkt und quantitativ dem Abfall (11) zugeführt wird.

Nach Umschalten des Ventils (6) in Stellung "INJECT" wird der Analyt mit Hilfe des von der HPLC-Pumpe (4) geförderten Analysen-Puffers (2; Flußrate: 0,8 ml/min) innerhalb von 5 min vollständig von der Vorsäule (7) eluiert und auf die nachgeschaltete analytische Säule (8) transferiert.

Nach Umschalten des Ventils (6) in die Stellung "LOAD" erfolgt die analytische Trennung unter isokratischen Bedingungen (Flußrate: 0,8 ml/min). Die eluierten Verbindungen werden im Detektor (9) gemessen und die Daten im Integrator (10) ausgewertet. Gleichzeitig wird die Vorsäule mit Hilfe der Pumpe (3) für einen neuen Analysenzyklus konditioniert.

### E) **Analysenergebnis**

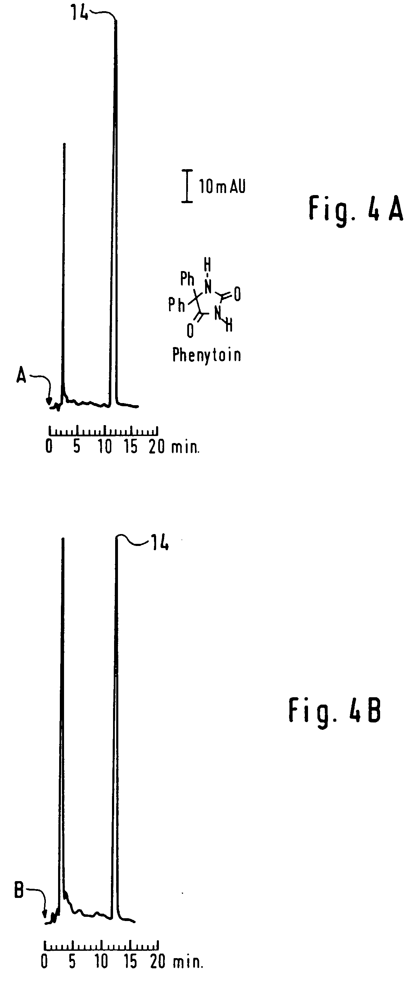

Figur 4 enthält die resultierenden Elutionsdiagramme für:

Fig. 4A:     den Kalibrator (1 µg Phenytoin; 14)
Fig. 4B:     Humanplasma (100 µl) enthaltend 1 µg Phenytoin (14)

### **Beispiel 8:**

Direktinjektion mit integrierter Probenaufbereitung; Trennung im Ionenpaar-Modus: Analyse von Tryptophan-Metaboliten in Humanserum

Der apparative Aufbau und die Stellungen des automatischen Umschaltventils sind identisch zu denen in Beispiel 7.

### C) **Chromatographische Bedingungen**

Vorsäule: gemäß Beispiel 1; Säulendimension: 30 x 4 mm I.D.; Vorsäulen-Puffer: 0,1 M $NaH_2PO_4$, 5 mM Octan-1-sulfonsäure, pH 4,0; Analysen-Puffer: 0,1 M $NaH_2PO_4$, 5 mM Octan-1-sulfonsäure, 20 % (v/v) Acetonitril, pH 6,0; Detektion: Fluoreszenz, Anregung 300 nm, Emission 350 nm.

### D) **Vollautomatischer Analysenzyklus**

Nach Injektion der Serumprobe (100 µl) durch den automatischen Probengeber (5) in Stellung "LOAD" des elektrischen Umschaltventils (6) gelangt die Probe mit Hilfe des von der HPLC-Pumpe (3) geförderten Vorsäulen-Puffers (1; Flußrate: 0,5 ml/min) auf die Vorsäule (7) mit dem erfindungsgemäßen Sorbens. Der Analyt 5-Hydroxyindolessigsäure ist unter den gewählten pH-Bedingungen (pH 4,0) elektroneutral, während der Analyt 5-Hydroxytryptamin (Serotonin) eine positive Ladung trägt, die durch Zugabe eines lipophilen Ionenpaarreagenz (Octan-1-sulfonsäure) kompensiert wird. Beide Analyten können somit unter Ionenpaarchromatographischen Bedingungen selektiv auf der Vorsäule (7) reteniert werden, während die biologische Restmatrix (Proteine, etc.) innerhalb von 12 min direkt und quantitativ dem Abfall (11) zugeführt wird. Nach Umschalten des Ventils (6) in Stellung "INJECT" werden die Analyten mit Hilfe des von der HPLC-Pumpe (4) geförderten Analysen-Puffers (2; Flußrate: 1 ml/min) infolge des erhöhten pH-Wertes (pH 6,0) und Anteils an organischem Lösungsmittel (20 % Acetonitril, v/v) innerhalb von 3 min vollständig von der Vorsäule (7) eluiert und auf die nachgeschaltete analytische Säule (8) transferiert.

Nach Umschalten des Ventils (6) in die Stellung "LOAD" erfolgt die analytische Trennung unter isokratischen Bedingungen (Flußrate: 0,8 ml/min). Die eluierten Verbindungen werden im Detektor (9) gemessen und die Daten im Integrator (10) ausgewertet. Gleichzeitig wird die Vorsäule mit Hilfe der Pumpe (3) für einen neuen Analysenzyklus konditioniert.

### E) **Analysenergebnis**

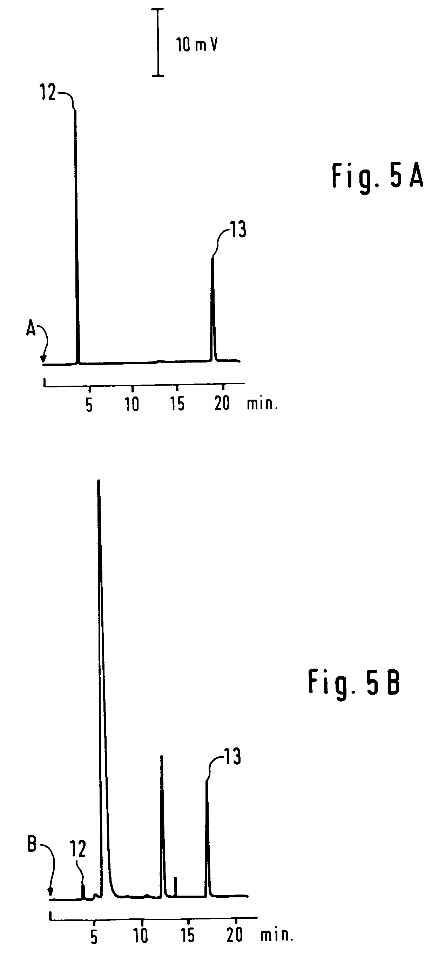

Figur 5 enthält die resultierenden Elutionsdiagramme für:

Fig. 5A: Kalibrator:     (12) 5-Hydroxyindolessigsäure, 66,8 pmol
          (13) 5-Hydroxytryptamin, 80,2 pmol

Fig. 5B: Humanplasma (100 µl) enthaltend:     (12) 5-Hydroxyindolessigsäure, 4,0 pmol
          (13) 5-Hydroxytryptamin, 89,6 pmol

### **Patentansprüche**

1. Packungsmaterial für die Flüssigkeitschromatographie basierend auf porösen hydroxylgruppenhaltigen Materialien mit Umkehrphasen, die auf die inneren Oberflächen der Partikel beschränkt sind, dadurch gekennzeichnet, daß die Umkehrphasen aus Fettsäureestern bestehen.

2. Packungsmaterial nach Anspruch 1, dadurch gekennzeichnet, daß die porösen Partikel aus mit 2,3-Dihydroxypropoxy-Gruppen modifiziertem Kieselgel bestehen.

3. Packungsmaterial nach Anspruch 1, dadurch gekennzeichnet, daß die porösen Partikel aus mit 2,3-Dihydroxypropoxy-Gruppen modifiziertem Glas bestehen.

4. Packungsmaterial nach Anspruch 1, dadurch gekennzeichnet, daß die porösen Partikel aus einem hydroxylgruppenhaltigen organischen Polymer oder Copolymer bestehen.

5. Verfahren zur Herstellung von Packungsmaterial für die Flüssigkeitschromatographie mit auf die inneren Oberflächen von porösen Partikeln beschränkten Umkehrphasen, bestehend aus Fettsäureestern, mit folgenden Verfahrensschritten:

   a) Einführung von Hydroxylgruppen, sofern noch nicht im Ausgangsmaterial vorhanden, in das Trägermaterial;
   b) Veresterung der Hydroxylgruppen an den gesamten inneren und äußeren Oberflächen der Partikel mittels geeigneter Fettsäurederivate;
   c) enzymatische Hydrolyse der an den äußeren Oberflächen befindlichen Fettsäureester mittels Lipasen und/oder Esterasen.

6. Verfahren nach Anspruch 5, dadurch gekennzeichnet, daß die esterspaltenden Enzyme an einen Träger chemisch gebunden sind, und daß die Korngröße des Trägers großer als der mittlere Porendurchmesser der porösen Partikel ist.

7. Verfähren nach Anspruch 6, dadurch gekennzeichnet, daß der verwendete Träger magnetische Eigenschaften besitzt.

8. Verfahren zur chromatographischen Trennung von Substanzgemischen, dadurch gekennzeichnet, daß ein poröses chromatographisches Packungsmaterial benutzt wird, dessen innere Oberfläche mit Fettsäureestern belegt ist.

9. Verfahren zur Probenvorbereitung von biologischen Proben, dadurch gekennzeichnet, daß störende makromolekulare Begleitsubstanzen mittels eines Materials entfernt werden, dessen poröse Partikel an ihren inneren Oberflächen Umkehrphasen, bestehend aus Fettsäureestern, besitzen.


## Claims

1. Packing material for liquid chromatography based on porous materials which contain hydroxyl groups and have reverse phases which are restricted to the inner surfaces of the particles, characterised in that the reverse phases consist of fatty acid esters.

2. Packing material according to Claim 1, characterised in that the porous particles consist of silica gel modified with 2,3-dihydroxypropoxy groups.

3. Packing material according to Claim 1, characterised in that the porous particles consist of glass modified with 2,3-dihydroxypropoxy groups.

4. Packing material according to Claim 1, characterised in that the porous particles consist of an organic polymer or copolymer containing hydroxyl groups.

5. Process for the preparation of packing material for liquid chromatography with reverse phases which are restricted to the inner surfaces of porous particles and consist of fatty acid esters, with the following process steps:

   a) introduction of hydroxyl groups, where not yet present in the starting material, into the support material;
   b) esterification of the hydroxyl groups on the entire inner and outer surfaces of the particles by means of suitable fatty acid derivatives;
   c) enzymatic hydrolysis of the fatty acid esters located on the outer surfaces by means of lipases and/or esterases.

6. Process according to Claim 5, characterised in that the ester-cleaving enzymes are chemically bonded to a carrier, and in that the particle size of the carrier is larger than the median pore diameter of the porous particles.

**7.** Process according to Claim 6, characterised in that the carrier which is used has magnetic properties.

**8.** Method for the chromatographic separation of mixtures of substances, characterised in that a porous chromatographic packing material whose inner surface is covered with fatty acid esters is used.

**9.** Method for sample preparation for biological samples, characterised in that interfering concomitant macromolecular substances are removed by means of a material whose porous particles have on their inner surfaces reverse phases consisting of fatty acid esters.

**Revendications**

**1.** Corps de remplissage pour chromatographie en phase liquide à base de matières poreuses contenant des groupes hydroxyle avec inversion de phases, qui sont limitées aux surfaces internes des particules, caractérisé en ce que les phases inversées se composent d'esters d'acides gras.

**2.** Corps de remplissage selon la revendication 1, caractérisé en ce que les particules poreuses se composent de gel de silice modifié avec des groupes 2,3-dihydroxypropoxy.

**3.** Corps de remplissage selon la revendication 1, caractérisé en ce que les particules poreuses se composent de verre modifié avec des groupes 2,3-dihydroxypropoxy.

**4.** Corps de remplissage selon la revendication 1, caractérisé en ce que les particules poreuses se composent d'un polymère ou copolymère organique contenant des groupes hydroxyle.

**5.** Procédé de préparation d'un corps de remplissage pour la chromatographie en phase liquide avec phases inversées limitées aux surfaces internes de particules poreuses, constituées d'esters d'acides gras, avec les étapes de procédé suivantes:

a) introduction de groupes hydroxyle, dans la mesure où il n'y en a pas encore dans le produit de départ, dans la matière support;
b) estérification des groupes hydroxyle sur la totalité des surfaces internes et externes des particules au moyen de dérivés d'acides gras appropriés;
c) hydrolyse enzymatique des esters d'acides gras se trouvant sur les surfaces externes au moyen de lipases et/ou d'estérases.

**6.** Procédé selon la revendication 5, caractérisé en ce que les enzymes saponifiantes sont liées chimiquement sur un support, et que la granulométrie du support est supérieure au diamètre moyen des pores des particules poreuses.

**7.** Procédé selon la revendication 6, caractérisé en ce que le support utilisé possède des propriétés magnétiques.

**8.** Procédé de séparation chromatographique de mélanges de substances, caractérisé en ce qu'on utilise un corps de remplissage chromatographique poreux dont la surface interne est recouverte d'esters d'acides gras.

**9.** Procédé de préparation d'échantillons biologiques, caractérisé en ce qu'on élimine les impuretés macromoléculaires gênantes au moyen d'un corps dont les particules poreuses possèdent à leur surface interne des phases inversées constituées d'esters d'acides gras.

Fig. 1A

A

OVER

10 mAU

0   5   10  15  20 min.

Fig. 1B

B

OVER

10 mAU

0   5   10  15  20 min.

Fig. 2

Fig. 3A

Fig. 3B

Fig. 4 A

10 mAU

Phenytoin

Fig. 4 B

Fig. 5 A

Fig. 5 B